# EUROPÄISCHE PATENTSCHRIFT

(11) **EP 1 838 576 B1**
(45) Veröffentlichungstag und Bekanntmachung des Hinweises auf die Patenterteilung: **13.04.2016**
(21) Anmeldenummer: 05793240.2
(22) Anmeldetag: 11.10.2005
(51) Int. Cl.: B64D 11/06, B60N 2/48

(54) **KOPFSTÜTZE FÜR EINEN SITZ, INSBESONDERE FLUGGASTSITZ**
HEAD REST FOR A SEAT, IN PARTICULAR FOR AN AIRCRAFT PASSENGER SEAT
APPUIE-TETE POUR SIEGE, EN PARTICULIER POUR SIEGE D'AVION

(30) Priorität: 11.12.2004 DE 102004059864
(43) Veröffentlichungstag der Anmeldung: 03.10.2007
(73) Patentinhaber: Recaro Aircraft Seating GmbH & Co. KG, 74523 Schwäbisch Hall (DE)
(72) Erfinder: SCHÜRG, Hartmut, 74523 Schwäbisch Hall (DE)
(74) Vertreter: Daub, Thomas
(86) Internationale Anmeldenummer: PCT/EP2005/010912
(87) Internationale Veröffentlichungsnummer: WO 2006/061057

(56) Entgegenhaltungen:
- DE-A1- 2 330 463
- DE-B- 1 011 743
- US-A1- 2004 007 910
- US-B1- 6 669 143

## Beschreibung

Die Erfindung bezieht sich auf eine Kopfstütze für einen Sitz, insbesondere Fluggastsitz, mit einer am Rückenlehnenteil des Sitzes anbringbaren Tragstruktur, die eine für die Anlehnung des Kopfes des Sitzbenutzers vorgesehene Stützstruktur aufweist, die aus einzelnen strang- oder bandförmigen Stützteilen vorgegebener Nachgiebigkeit gebildet ist.

Eine Kopfstütze dieser Art, die für die Verwendung bei einem Kraftfahrzeugsitz vorgesehen ist, ist aus dem Dokument DE 27 14 796 A1 bekannt. Wenn Kopfstützen dieser Art, wie dies bei der erwähnten, bekannten Kopfstütze der Fall ist, für den Einsatz bei Kraftfahrzeugen für den Individualverkehr vorgesehen sind, sind an die betreffende Kopfstütze im wesentlichen zwei Anforderungen zu stellen. Zum einen ist dies die Schutzfunktion für den Kopf des Kraftfahrers im Gefahrenfalle. Zweitens soll die Kopfstütze die Sicht des Kraftfahrers nach hinten so wenig wie möglich beeinträchtigen. Im Hinblick auf diese Forderungen sind bei der erwähnten, bekannten Kopfstütze die die Stützstruktur bildenden Stützteile durch dünne Stränge gebildet, die so geführt sind, dass sie ein an der Tragstruktur aufgehängtes Netz bilden.

Eine Kopfstütze mit allen Mermaken des Oberbegriffs des Anspruchs 1 ist aus der DE 1101743 bekannt. Die Gestaltung der Stützstruktur in Form eines eine gewisse Durchsicht ermöglichenden Netzes behindert die Sicht des Kraftfahrers in erstrebter Weise nur in geringem Maße. Ein solches Netz weist jedoch keine ausreichende Festigkeit auf, um in einem Crashfall ausreichenden Schutz für Kopf und/oder Halswirbel des Sitzbenutzers zu bietet, so dass die bekannte Kopfstütze, obgleich die Sichtbarkeit nach hinten wenig beeinträchtigt wird, aufgrund der ungenügenden Schutzfunktion für den Einsatz bei Kraftfahrzeugen nicht geeignet ist.

Noch weniger wird die bekannte Kopfstütze den zusätzlichen Anforderungen gerecht, die an Kopfstützen für Passagiersitze für allgemeine Beförderungsmittel zu stellen sind, beispielsweise für Omnibusse, Fährschiffe oder insbesondere Luftfahrzeuge. Kopfstützen für derartige Verwendungszwecke müssen nicht nur in einem Crashfall die erforderliche Schutzfunktion erfüllen, sondern sogar vorrangig ein die Bequemlichkeit des Sitzbenutzers erhöhendes Komfortelement des Sitzes bilden. Bei Verwendung bei Kraftfahrzeugen braucht die Kopfstütze keine Auflagefläche zur Verfügung zu stellen, die dem Kraftfahrer während einer über einen längeren Zeitraum erfolgenden Anlehnung des Kopfes eine komfortable, für eine Ruhe- oder Schlafposition geeignete Abstützung bieten würde. Bei Kopfstützen für Passagiersitze, insbesondere Fluggastsitze, soll dagegen in Anbetracht der in Frage kommenden, gegebenenfalls langen Reisedauer der Kopf des Sitzbenutzers bei Anlehnung an die Kopfstütze bequem abgestützt sein, insbesondere, wenn der Sitzbenutzer eine Ruhe- oder Schlafposition einnimmt.

Dementsprechend stellt sich die Erfindung die Aufgabe, eine Kopfstütze für einen Sitz, insbesondere Fluggastsitz, zur Verfügung zu stellen, die eine optimale Abstützung des an die Kopfstütze angelehnten Kopfes des Sitzbenutzers ermöglicht.

Erfindungsgemäß ist diese Aufgabe durch eine Kopfstütze gelöst, die die Merkmale des Anspruches 1 in seiner Gesamtheit aufweist.

Dadurch, dass gemäß dem Anspruch 1 auf der an der Tragstruktur befindlichen Stützstruktur eine weitere Stützstruktur mit demgegenüber anders gewählter Nachgiebigkeit angeordnet ist und diese beiden Strukturen zudem mit einer äußeren Überzugstruktur versehen sind, ergibt sich für die an der Überzugstruktur gebildete Auflagefläche für den Kopf des Sitzbenutzers aus den einzelnen Nachgiebigkeiten des so dreistufig gestalteten Strukturaufbaues eine resultierende Vorspannung solcher Art, dass die bei der Anlehnung des Kopfes des Sitzbenutzers ausgeübte Anlagekraft zu einer Vergrößerung der Auflagefläche führt. Dies führt in unterschiedlichen, zurückgelehnten Ruhe-oder Schlafpositionen zu einer optimalen Abstützung des Kopfes des Sitzbenutzers, so dass ein Höchstmaß an Sitzkomfort erreicht ist.

Bei bevorzugten Ausführungsbeispielen weist die Tragstruktur einen am Rückenlehnenteil verankerbaren, zur Sitzlängsrichtung quer verlaufenden Mitteilteil und an dessen beiden seitlichen Enden jeweils einen nach vorn vorstehenden Seitenteil auf, und Stützteile der ersten Stützstruktur überdekken sowohl den Mittelteil als auch die Seitenteile zumindest in Teilbereichen. Bei derartiger Gestaltung, bei der der Anlehnungsbereich seitlich durch vorstehende "Ohren" begrenzt ist, ergibt sich für den Sitzbenutzer insbesondere in der Seitenschlaf-Position, bei der der seitliche Kopfbereich an den Übergangsbereich zwischen Mittelteil und ohrenartigem Seitenteil angelegt ist, eine besonders bequeme Abstützung durch Vergrößerung der Auflagefläche, wodurch ein Abrutschen des Kopfes des schlafenden Sitzbenutzers nach unten verhindert wird.

Vorzugsweise sind die Stützteile der ersten Stützstruktur bandförmig, wobei die Bänder, einander teilweise überlappend und in unterschiedliche Richtungen verlaufend, zumindest an den für die Anlehnung des Kopfes vorgesehenen Bereichen von Mittelteil und Seitenteilen der Tragstruktur vorgesehen sind.

Vorzugsweise ist die Anordnung so getroffen, dass zumindest ein von Seitenteil zu Seitenteil entlang des Mittelteiles durchgehendes bandförmiges Stützteil vorhanden ist.

Bei vorteilhaften Ausführungsbeispielen ist die an der ersten Stützstruktur befindliche weitere Stützstruktur durch zumindest ein solches Polsterteil gebildet, das die erste Stützstruktur zumindest in dem für die Anlehnung des Kopfes dienenden Bereich überdeckt und das an der ersten Stützstruktur unmittelbar anliegend ist.

Vorzugsweise ist auch die Überzugstruktur an dem die weitere Stüfzstruktur bildenden Polsterteil unmittelbar anliegend.

Nachstehend ist die Erfindung anhand eines in der Zeichnung dargestellten Ausführungsbeispieles im einzelnen erläutert. Es zeigen:
Fig. 1 eine perspektivisch gezeichnete Vorderansicht lediglich der Tragstruktur eines Ausführungsbeispieles der erfindungsgemäßen Kopfstütze mit an den Seitenteilen der Tragstruktur vorstehenden, ohrenartigen Polsterkörpern, wobei die Tragstruktur ohne zugehörige Stützstrukturen und ohne Überzugstruktur gezeichnet ist;
- Fig. 2 eine in ähnlichem Maßstab wie Fig. 1 gezeichnete, perspektivische Vorderansicht der Tragstruktur, jedoch versehen mit einer ersten Stützstruktur aus bandförmigen Stützteilen;
- Fig. 3 einen schematisch vereinfachten Horizontalschnitt des Ausführungsbeispieles in gegenüber Fig. 1 und 2 verkleinertem Maßstab und
- Fig. 4 eine stark schematisch vereinfacht gezeichnete Draufsicht des Ausführungsbeispieles, wobei die Anlehnung des Kopfes eines Sitzbenutzers in einer Seitenschlaf-Position verdeutlicht ist.

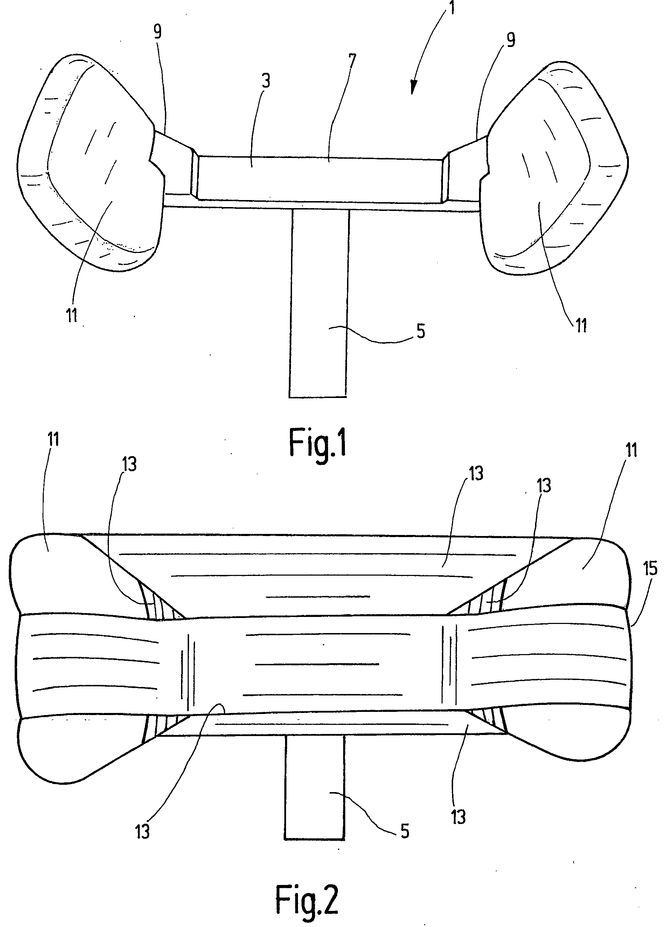

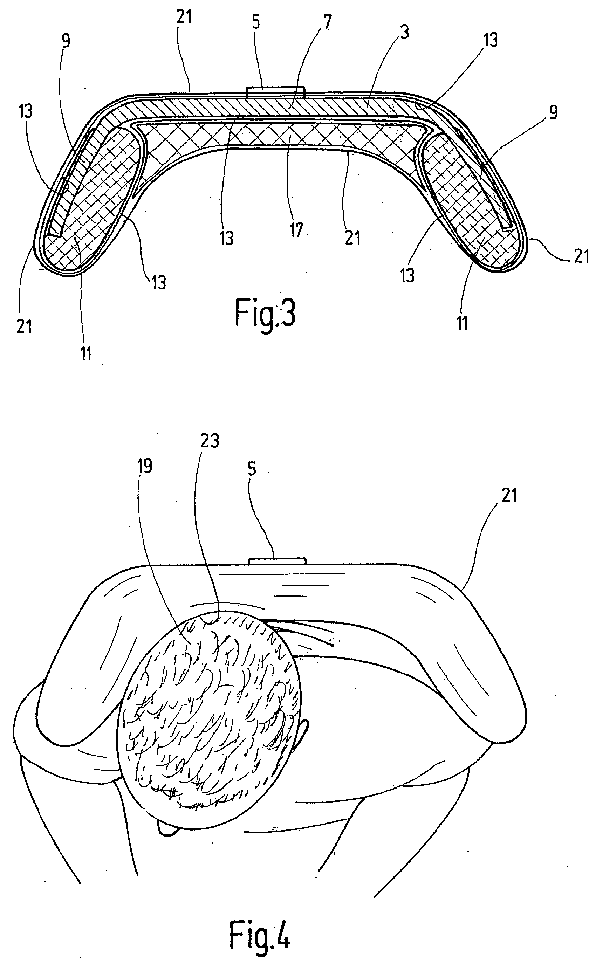

Die Gestaltung der als Ganzes mit 1 bezeichneten Tragstruktur des hier zu beschreibenden Ausführungsbeispieles der Kopfstütze weist, wie am Deutlichsten aus Fig. 1 und 3 zu ersehen ist, einen metallischen Querträger 3 auf, der, bezogen auf die normale Einbaupositin des zugehörigen Sitzes, horizontal und zur Hauptebene der Rückenlehne dieses zugehörigen Sitzes parallel verlaufend an der Struktur der Rückenlehne mittels einer Trägerleiste 5 verankerbar ist, die sich vom Zentralbereich des Querträgers 3 nach unten erstreckt. Alternativ könnten anstelle der mittig angeordneten einzigen Trägerleiste 5 zwei am Querträger 3 außermittig angebrachte Trägerleisten (nicht gezeigt) vorgesehen sein. Die beiden seitlichen Endbereiche des Querträgers 3, die sich an dessen Mittelteil 7 beidseits anschließen, bilden mit dem Mittelteil 7 einstückige, nach vorn divergierend verlaufende Seitenteile 9. Wie insbesondere aus Fig. 1 und 3 zu ersehen ist, tragen die Seitenteile 9 ohrenartig gerundete Polsterkörper 11, bei denen es sich beim gezeigten Ausführungsbeispiel um an die Seitenteile 9 angeschäumte Schaumstoffkörper handelt.

Fig. 2 und 3 verdeutlichen die an der Tragstruktur 1 vorgesehene erste Stützstruktur. Deren Stützteile sind aus Bändern 13 gebildet. Wie aus Fig. 2 und 3 zu entnehmen ist, ist die Tragstruktur 1 mit diesen Bändern 13 bewickelt, wobei sich die Bänder 13 mit unterschiedlichen Bandrichtungen an Vorderseite und Rückseite der Tragstruktur 1, an dieser anliegend, erstrekken. Wie am Deutlichsten aus Fig. 2 zu ersehen ist, ist auch ein Großteil der seitlichen Polsterkörper 11 bewickelt, wobei sich ein Band 13 durchgehend von Polsterkörper 11 zu Polsterkörper 11 erstreckt und über deren seitliche Aussenränder jeweils mit gewisser Vorspannung nach hinten geführt ist, was an einer geringen Einwölbung 15 am betreffenden Polsterkörper 11 erkennbar ist. Mit ihrer Rückseite sind die Bänder 13 jeweils an den zugewandten Teilen der Tragstruktur 1 und der Polsterkörper 11 festgelegt.

Fig. 3 zeigt, dass auf der durch die Bänder 13 gebildeten ersten Stützstruktur eine weitere Stützstruktur in Form eines Polsterteiles 17 angeordnet ist. Beim vorliegenden Beispiel ist der Polsterteil 17 durch eine Schaumstoffeinlage gebildet, die sich, an den Bändern 13 anliegend, nahezu über den gesamten Bereich der Anlehnung des Kopfes 19 (Fig. 4) eines Sitzbenutzers erstreckt.

Wie aus Fig. 3 und 4 zu ersehen ist, sind erste und zweite Stützstruktur, also Bänder 13 und Polsterteile 17, durch eine äußere Überzugstruktur 21 bedeckt, die eine vollständige Umhüllung des gesamten Kopfstützenkörpers, sowohl an dessen Vorderseite als auch an dessen Rückseite, bildet, wobei lediglich die Trägerleiste 5 als Verankerungsteil nicht vollständig umhüllt ist.

Wie Fig. 4 verdeutlicht, führt der mehrstufige Strukturaufbau der Kopfstütze aus erster Stützstruktur aus Bändern 13 mit vorgegebener Nachgiebigkeit und darauf befindlicher zweiter Stützstruktur in Form eines demgegenüber eine andere Nachgiebigkeit aufweisenden Polsterteiles 17 in Verbindung mit einer weiteren Überzugstruktur 21 zu einer resultierenden Gesamtnachgiebigkeit, bei der die Anlagekraft des Kopfes 19 des Sitzbenutzers an der Anlagestelle zu einer Vergrößerung der Auflagefläche 23 führt, siehe Fig. 4.

Bei der Überzugstruktur 21 kann es sich um einen textilen Bezugsstoff mit einer Oberflächenstruktur handeln, die so gewählt ist, dass für den Kopf 19 des Sitzbenutzers ein angenehmes Kissen gebildet wird, an der Auflagefläche 23 jedoch ein gewisser Reibschluß gegeben ist, so dass bei in einer Ruhe- oder Schlafposition befindlichem Sitzbenutzer ein Abrutschen des Kopfes 19 nach unten verhindert wird.

Da, wie oben erwähnt, die Bänder 13 an der Tragstruktur 1 nicht nur an der Vorderseite im Bereich der Anlehnung des Kopfes 19 des Sitzbenutzers vorgesehen sind, sondern die Tragstruktur 1 auch an der Rückseite mit Bändern 13 umwickelt ist, tragen die Bänder 13 zu einer Erhöhung der Festigkeit der Gesamtstruktur bei. Anstelle eines metallischen Werkstoffes könnte daher für den Querträger 3 mit den Seitenteilen 9 auch ein andersartiger, nicht metallischer Werkstoff benutzt werden, wodurch eine Gewichtsersparnis erreicht würde.

## Patentansprüche

1. Kopfstütze für einen Sitz, insbesondere Fluggastsitz, mit einer am Rückenlehnenteil des Sitzes anbringbaren Tragstruktur (1), die eine für die Anlehnung des Kopfes (19) des Sitzbenutzers vorgesehene Stützstruktur aufweist, die aus einzelnen strang- oder bandförmigen Stützteilen (13) vorgegebener Nachgiebigkeit gebildet ist, wobei auf der Stützstruktur eine weitere Stützstruktur in der Art eines Polsterteiles (17) mit einer gegenüber den Stützteilen (13) der ersten Stützstruktur anders gewählten Nachgiebigkeit angeordnet ist, wobei zumindest die Stützstrukturen mit einer äußeren Überzugstruktur (21) versehen sind und wobei die Tragstruktur (1) einen am Rückenlehnenteil verankerbaren, zur Sitzlängsrichtung quer verlaufenden Mittelteil (7) aufweist, **dadurch gekennzeichnet, dass** der Mittelteil (7) an beiden seitlichen Enden jeweils ein nach vorn vorstehendes Seitenteil (9) aufweist und dass Stützteile (13) der ersten Stützstruktur sowohl den Mittelteil (7) als auch die Seitenteile (9) zumindest in Teilbereichen überdecken.

2. Kopfstütze nach Anspruch 1, **dadurch gekennzeichnet, dass** bandförmige Stützteile (13) der ersten Stützstruktur, einander teilweise überlappend und in unterschiedliche Richtungen verlaufend, zumindest an den für die Anlehnung des Kopfes (19) vorgesehenen Bereichen von Mitteilteil (7) und Seitenteilen (9) der Tragstruktur (1) vorgesehen sind.

3. Kopfstütze nach Anspruch 2, **dadurch gekennzeichnet, dass** zumindest ein von Seitenteil (9) zu Seitenteil (9) entlang des Mittelteiles (7) durchgehendes bandförmiges Stützteil (13) der ersten Stützstruktur vorgesehen ist.

4. Kopfstütze nach Anspruch 3, **dadurch gekennzeichnet, dass** an den Seitenteilen (9) der Tragstruktur (1) Polsterkörper (11) vorgesehen sind, die Abstützflächen für jeweils betreffende, anliegende bandförmige Stützteile (13) bilden.

5. Kopfstütze nach einem der Ansprüche 1 bis 4, **dadurch gekennzeichnet, dass** die an der ersten Stützstruktur befindliche weitere Stützstruktur durch zumindest ein solches Polsterteil (17) gebildet ist, das die erste Stützstruktur zumindest in dem für die Anlehnung des Kopfes (19) dienenden Bereich bedeckt und das an der ersten Stützstruktur unmittelbar anliegend ist.

6. Kopfstütze nach Anspruch 5, **dadurch gekennzeichnet, dass** die Überzugstruktur (21) an dem die weitere Stützstruktur bildenden Polsterteil (17) unmittelbar anliegend ist.

7. Kopfstütze nach einem der Ansprüche 1 bis 6, **dadurch gekennzeichnet, dass** der Mittelteil (7) der Tragstruktur (1) durch einen, bezogen auf die Einbauposition des Sitzes, horizontal verlaufenden Querträger (3) gebildet ist, von dessen Zentralbereich sich als Verbindungsteil mit dem Rückenlehnenteil des Sitzes eine Trägerleiste (5) nach unten erstreckt, und dass sich die an beiden seitlichen Enden des Querträgers (3) befindlichen Seitenteile (9) zueinander leicht divergierend verlaufend nach vorn erstrecken.

## Claims

1. Headrest for a seat, in particular for an aircraft passenger seat, with a carrier structure (1) that is mountable to a backrest part of the seat and comprises a support structure provided for resting the the seat user's head (19) against and implemented from individual strand-shaped or ribbon-shaped support elements (13) of predetermined flexibility, wherein a further support structure, which is like a cushion part (17) and has a flexibility selected differing from the support elements (13) of the first support structure, is arranged on the support structure, wherein at least the support structures are provided with an exterior cover structure (21) and wherein the carrier structure (1) comprises a middle part (7) that is anchorable at the backrest part and extends transversely to the longitudinal seat direction, **characterised in that** the middle part (7) comprises at both lateral ends a respective forward-protruding lateral part (9) and that support elements (13) of the first support structure cover both the middle part (7) and the lateral parts (9) at least in partial regions.

2. Headrest according to claim 1, **characterised in that** ribbon-shaped support elements (13) of the first support structure, which partially overlap each other and extend in different directions, are provided at least at those regions of the middle part (7) and the lateral parts (9) of the carrier structure (1) which are intended for resting the head (19) against.

3. Headrest according to claim 2, **characterised in that** at least one ribbon-shaped support element (13) of the first support structure is provided that continues along the middle part (7) from one lateral part (9) to the other lateral part (9).

4. Headrest according to claim 3, **characterised in that** at the lateral parts (9) of the carrier structure (1) cushion bodies (11) are provided, which form support surfaces for respectively allocated adjacent ribbon-shaped support elements (13).

5. Headrest according to one of claims 1 to 4, **characterised in that** the further support structure that is arranged at the first support structure is implemented by at least one such cushion part (17) that covers the first support structure at least in the region provided for resting the head (19) against and is directly adjacent to the first support structure.

6. Headrest according to claim 5, **characterised in that** the cover structure (21) is directly adjacent on the cushion part (17) forming the further support structure.

7. Headrest according to one of claims 1 to 6, **characterised in that** the middle part (7) of the carrier structure (1) is implemented by a crossbeam (3) extending horizontally with respect to the mounting position of the seat, from the central region of which a support bar (5) extends downward as a connecting part to the backrest part of the seat, and that the lateral parts (9) situated at both lateral ends of the crossbeam (3) extend forward in such a way that they run slightly divergent from each other.

## Revendications

1. Appuie-tête pour un siège, en particulier pour siège de passager d'avion, avec une structure porteuse (1), laquelle est montable à la pièce dossier du siège et comporte une structure de soutien prévue pour appuyer la tête (19) de l'usager du siège et implémentée des éléments d'appui (13) individuels en forme de brin ou de ruban et de flexibilité définie ; une autre structure de soutien du type élément de rembourrage (17) avec une flexibilité sélectionnée différente des éléments d'appui (13) de la structure de soutien première étant disposée sur la structure de soutien ; et au moins les structures de soutien étant pourvues d'une structure de housse (21) extérieure ; et la structure porteuse (1) comportant une partie centrale (7) ancrable à la pièce dossier et s'étendant transversalement à la direction longitudinale du siège, **caractérisé en ce que** la partie centrale (7) comporte à les deux extrémités latérales respectivement une partie latérale (9) saillant en avant, et que des éléments d'appui (13) de la première structure de soutien recouvrent tant la partie centrale (7) que les parties latérales (9) au moins dans des régions partielles.

2. Appuie-tête selon la revendication 1, **caractérisé en ce que** des éléments d'appui (13) en forme de ruban de la première structure de soutien sont prévues, au moins à des zones de la partie centrale (7) et des parties latérales (9) de la structure porteuse (1) prévues pour appuyer la tête (19), de cette manière qu'ils se chevauchent partiellement et s'étendent dans des directions différentes.

3. Appuie-tête selon la revendication 2, **caractérisé en ce qu'**au moins un élément d'appui (13) en forme de ruban de la première structure de soutien est prévu, lequel passe le long de la partie centrale (7) d'une partie latérale (9) à l'autre partie latérale (9).

4. Appuie-tête selon la revendication 3, **caractérisé en ce que** des corps de rembourrage (11) sont prévus à les parties latérales (9) de la structure porteuse (1), lesquels corps de rembourrage (11) implémentant des surfaces d'appui pour des éléments d'appui (13) en forme de ruban adjacents et respectivement correspondants.

5. Appuie-tête selon l'une quelconque des revendications 1 à 4, **caractérisé en ce que** l'autre structure de soutien disposée à la première structure de soutien est implémentée par au moins un élément de rembourrage (17) de ce type qu'il recouvre la première structure de soutien au moins dans la zone prévue pour appuyer la tête (19) et qu'il est directement adjacent à la première structure de soutien.

6. Appuie-tête selon la revendication 5, **caractérisé en ce que** la structure de housse (21) est directement adjacente à l'élément de rembourrage (17) implémentant l'autre structure de soutien.

7. Appuie-tête selon l'une quelconque des revendications 1 à 6, **caractérisé en ce que** la partie centrale (7) de la structure porteuse (1) est implémentée par un poutre transversale (3) s'étendant horizontalement relativement à la position de montage du siège, de la zone centrale de laquelle poutre transversale (3) une tige porteuse (5) s'étend vers le bas comme élément connectif avec la pièce dossier du siège, et que les pièces latérales (9) disposées à les deux extrémités latérales de la poutre transversale (3) s'étendent en avant de manière légèrement divergente.
